Europäisches Patentamt

European Patent Office

Office européen des brevets

(19)

(11) Veröffentlichungsnummer: **0 197 466 B1**

# (12) EUROPÄISCHE PATENTSCHRIFT

(45) Veröffentlichungstag der Patentschrift: **02.10.91**

(51) Int. Cl.5: **F24F 13/02**, F16L 23/00

(21) Anmeldenummer: **86104322.2**

(22) Anmeldetag: **27.03.86**

(54) **Luftkanalabschnitt mit angeformtem Verbindungsflansch.**

(30) Priorität: 06.04.85 DE 3512669

(43) Veröffentlichungstag der Anmeldung:
**15.10.86 Patentblatt 86/42**

(45) Bekanntmachung des Hinweises auf die
Patenterteilung:
**02.10.91 Patentblatt 91/40**

(84) Benannte Vertragsstaaten:
**AT BE CH DE FR GB IT LI LU SE**

(56) Entgegenhaltungen:
**EP-A- 0 047 467**
**EP-A- 0 135 602**
**DE-A- 2 553 720**
**DE-U- 7 408 661**

(73) Patentinhaber: **METU-System Meinig KG**
**Seitinger Strasse 186**
**W-7201 Rietheim-Weilheim 2(DE)**

(72) Erfinder: **Meinig, Manfred**
**Seitinger Strasse 186**
**W-7201 Rietheim-Weilheim(DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**W-7730 VS-Villingen-Schwenningen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Luftkanalabschnitt nach dem Oberbegriff des Anspruchs 1.

Der Verbindungsflansch kann dabei ein beliebig geformtes Hohlprofil aufweisen, dessen einzelne Schenkel im Schnitt gerade oder gekrümmt verlaufen. Meist wird das Hohlprofil des Verbindungsflansches mit einem radial von der Kanalwand ausgehenden Flanschteil und daran anschließenden, in unterschiedlichen Formen zur Kanalwand zurückgebogenen Stützschenkeln ausgeführt.

Bei aus der DE-U 74 08 661 bekannten Luftkanalabschnitten dieser Art werden die Stützschenkel der einstückig angeformten Verbindungsflansche an der Außenseite der Kanalwände durch Punktschweißen befestigt. Dieser zusätzliche Arbeitsgang verteuert nicht nur die Herstellung, sondern die punktgeschweißten Stellen sind darüber hinaus auch korrosionsanfällig und müssen vorzugsweise mit einem Rostschutzmittel überstrichen werden. Außerdem ist die erzielte Festlegung des Stützschenkels nur punktförmig und daher nicht über die ganze Länge des Profils gleichförmig stabil.

Aus der EP-A-0 135 602 ist ein verhältnismäßig komplizierter, nicht einstückig an die Kanalwand angeformter Verbindungsflansch bekannt, der im Profil mehrfach abgewinkelt und mit gekrümmten Abschnitten versehen werden muß und infolgedessen sehr aufwendig herzustellen ist. Er besitzt insbesondere geringe Stabilität gegen Zugbeanspruchungen der herzustellenden Flanschverbindung, da er sich bei Zugbelastung leicht nach außen aufbiegt und an der Stoßstelle auseinanderklafft. Zwar ist einer seiner freien Ränder in den nach außen aufgebogenen Rand der Kanalwand eingefalzt, jedoch ist keine Falztasche im Sinn der vorliegenden Erfindung gebildet, über die der umgebogene freie Rand des Verbindungsflansches zur besseren Aufnahme von Zugbelastungen eingehängt ist.

Durch die Erfindung soll ein Luftkanalabschnitt der eingangs genannten Art so verbessert werden, daß sich eine optimale Stabilität der Verbindungsflansche bei billigster Herstellung unter Vermeidung von korrosionsanfälligen Stellen, wie Punktschweißungen oder Nieten, ergibt.

Diese Aufgabe wird erfindungsgemäß durch die kennzeichnenden Merkmale des Anspruchs 1 gelöst.

Durch das Einfalzen des Randes des Stützschenkels in die Kanalwand bildet der Verbindungsflansch zusammen mit der Kanalwand ein Hohlprofil mit optimaler Stabilität. Wegen der Einstückigkeit treten insbesondere keine Dichtungsprobleme zwischen Verbindungsflansch und Kanalwand auf. Der Stützschenkel ist auf seiner vollen Länge an der Kanalwand verankert. Es besteht keinerlei Korrosionsgefahr durch punktgeschweißte Stellen, Nieten oder dergleichen. Da der erforderliche Falz im gleichen Arbeitsgang hergestellt werden kann, wie der Verbindungsflansch selbst, entfällt ein zusätzlicher Arbeitsgang zur Befestigung des Stützschenkels. Lediglich der Arbeitsgang des Profilierens dauert etwas länger. Dafür entfällt jedoch die ganze Maschinerie für andere Befestigungstechniken.

Der erforderliche Falz wird zweckmäßigerweise so hergestellt, daß unmittelbar von der Kanalwand selbst eine Falztasche gebildet wird, über bzw. in die der umgebogene Rand des Stützschenkels eingehängt wird. Durch das Aufeinanderwalzen der Blechflächen wird so eine ausreichende Festigkeit der Falzverbindung sowohl für Druck- als auch Zugbelastungen des Stützschenkels erzielt. Dabei wird bevorzugt die Falztasche von der Kanalwand nach außen gezogen, da hierbei die Kanalinnenfläche im wesentlichen glatt verbleibt.

Um eine noch höhere Festigkeit der Falzverbindung auch gegen Druckbelastungen des Stützschenkels zu erzielen, kann in Ausnahmefällen die Falztasche von der Kanalwand auch ins Kanalinnere gezogen werden. In diesem Fall wird der eingefalzte umgebogene Rand des Stützschenkels nicht nur gegen Zugbelastungen, sondern auch gegen Druckbelastungen sicher festgelegt. Dies kann insbesondere bei größeren Kanälen in der Mitte zwischen den zusammengeschraubten Ecken der Kanalabschnitte infolge der zwischen die Flansche eingebrachten Dichtungen ausnahmsweise der Fall sein, während im Eckbereich stets eine Zugbelastung des Stützschenkels auftritt. Für die meisten Anwendungsfälle ist daher eine von der Kanalwand nach außen gezogene Falztasche vorzuziehen.

Insbesondere bei größeren Luftkanälen dieser Art, z.B. bei Kanalbreiten von mehr als 1,5 m, ist es einerseits wegen dieser durch die Dichtungen hervorgerufenen Druckbelastung und andererseits wegen der auf größere Längen nicht mehr genau zu beherrschenden Ausrichtung derartiger Blechteile meist erforderlich, die Verbindungsflansche auch an Stellen zwischen den festen Eckverbindungen durch sog. Zwischenverbinder zusammenzuhalten. Dies ist bei angepunkteten oder angenieteten Stützschenkeln einfach dadurch möglich, daß an zwischen den Schweißpunkten oder Nieten gelegenen Stellen Zwischenverbinder in die Ränder gegenüberliegender Verbindungsflansche eingehängt werden. Wegen der durchgehenden Einfalzung des Randes des Stützschenkels ist dies bei der erfindungsgemäßen Ausführungsform nicht mehr möglich. Diese Schwierigkeit kann aber durch einen sehr einfach im gleichen Arbeitsgang anzuformenden, vom Stützschenkel nach außen stehenden Wulst gelöst werden. Auf die Wülste zweier aneinanderliegender Verbindungsflansche kann sodann an einer mittleren Stelle zwischen zwei Kanalecken eine Verbindungsklammer zur Ausrichtung der Flansche mit Preßsitz aufgesetzt werden. Darüber hinaus können die Wülste auch zur einfacheren Festlegung der Eckwinkelstücke in den Verbindungsflanschen dienen, indem die Eckwinkelstücke Ansätze aufweisen, die sich in die Wülste einlegen.

Bevorzugt wird ein im wesentlichen dreieckiges Hohlprofil mit einem schräg zur Kanalwand zurückgebogenen Stützschenkel. Der schräge Stützschenkel kann dabei vom äußeren Rand oder von einer weiter innen gelegenen Stelle des senkrecht zur Kanalwand verlaufenden Flanschteils ausgehen. Der Stützschenkel kann jedoch auch in irgendeiner anderen zweckmäßigen Form oder Neigung zur Kanalwand zurückgeführt sein.

Insbesondere ist es möglich, daß am Ende der Kanalwand zunächst ein nach außen weisender stützschenkel des Hohlprofils und daran anschließend die übrigen schenkel desselben angeformt werden, wobei zuletzt ein Anschlußschenkel als Fortsetzung der Kanalwand in deren Ebene zu liegen kommt. Der in diesem Falle am Anschlußschenkel angeordnete freie Rand des Verbindungsflansches kann dann in der gleichen Weise in die am Ende der Kanalwand angeformte Falztasche eingefalzt werden.

Selbstverständlich kann die Erfindung nicht nur auf einstückig durch Abkanten hergestellte Luftkanalabschnitte, sondern auch auf solche Luftkanalabschnitte angewendet werden, die aus einzelnen ebenen Tafeln mit angeformten Verbindungsflanschen oder aus Teilen zusammengesetzt werden, die je zwei Kanalwände umfassen. In diesem Falle muß lediglich darauf geachtet werden, daß entweder der Eckfalz zwischen zwei zusammenzufügenden Kanalwänden so weit verkürzt wird, daß die Profilrollen für die Herstellung und das Anfalzen des Verbindungsflansches freien Durchlauf haben, ohne den Falz zu beschädigen. In diesem Falle werden zuerst der Eckfalz anprofiliert und sodann erst die Verbindungsflansche hergestellt und angefalzt. Durch den verkürzten Eckfalz entstehende Undichtigkeiten an den Kanalecken können durch spezielle Eckwinkel überbrückt oder mit einem Dichtungsmittel abgedichtet werden.

Statt dessen können auch die Verbindungsflansche so weit verkürzt werden, daß die profilrollen auf die Eckfalze ungehindert durchlaufen können. In diesem Falle werden zuerst die Verbindungsflansche und sodann die Eckfalze anprofiliert. Da die Verbindungsflansche dabei leicht verkürzt sind, müssen die Eckwinkelstücke entsprechend längere Schenkel aufweisen.

In weiteren Unteransprüchen sind vorteilhafte Ausgestaltungen der Erfindung unter Schutz gestellt.

Anhand der Figuren werden Ausführungsbeispiele der Erfindung näher erläutert. Es zeigen:

Fig. 1    eine Teilschrägansicht des Endes eines erfindungsgemäßen Luftkanalabschnitts,

Fig. 2    einen Schnitt längs der Linie II-II in Fig. 1,

Fig. 3    einen Schnitt längs der Linie III-III in Fig. 1,

Fig. 4    einen Schnitt längs der Linie IV-IV in Fig. 1 und

Fig. 5 bis 8    der Fig. 2 entsprechende Schnitte durch andere Ausführungsformen der Erfindung.

Für gleiche oder entsprechende Teile sind in allen Figuren die gleichen Bezugszeichen verwendet.

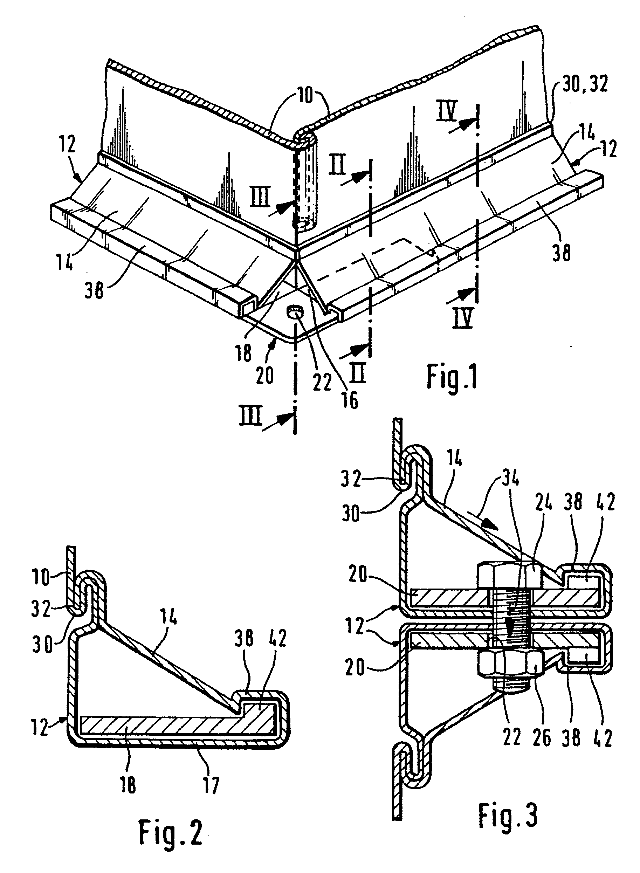

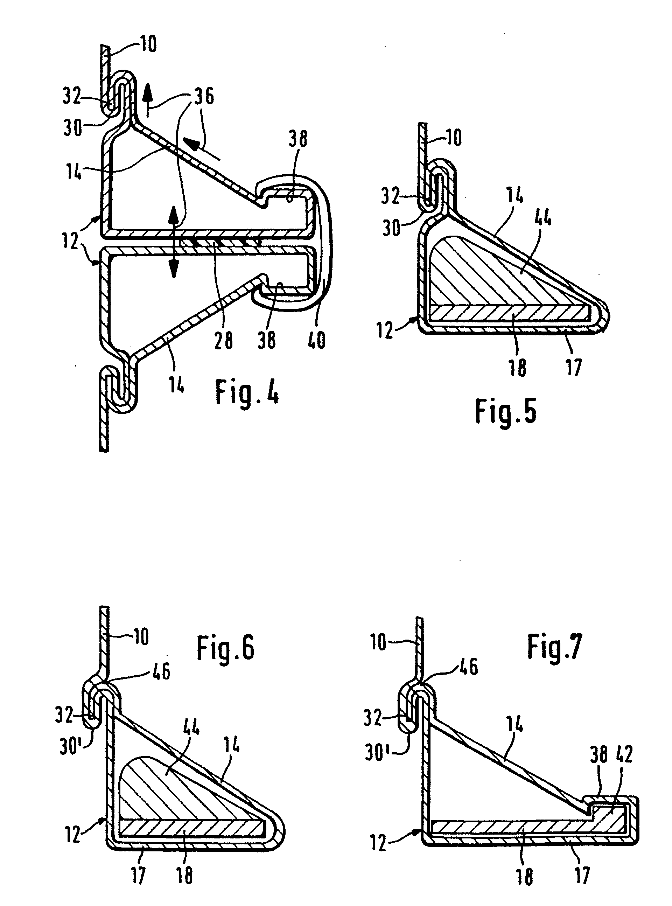

Bei der in den Fig. 1 bis 4 dargestellten Ausführungsform ist an den Enden der aus ebenem Blech bestehenden Kanalwände 10 eines Luftkanalabschnitts je ein Verbindungsflansch 12 mit im wesentlichen dreieckigem Profil einstückig angeformt. Dabei ist je ein schräg zur Kanalwand 10 zurückgebogener Stützschenkel 14 und ein senkrecht zur Kanalwand 10 stehender Flanschteil 17 vorgesehen. In das an den Ecken offene Profil 16 der Verbindungsflansche 12 sind die aufeinander senkrecht stehenden Schenkel 18 von allgemein mit 20 bezeichneten Eckwinkel stücken eingesetzt. Die Eckwinkelstücke 20 weisen in ihrem Scheitelpunkt jeweils eine Schrauböffnung 22 zum Einsetzen von Schraubbolzen 24 auf, auf die Muttern 26 so aufgeschraubt sind, daß aneinanderliegende Verbindungsflansche 12 in den Eckbereichen der Luftkanalabschnitte festgelegt werden. Zwischen die aneinanderliegenden Verbindungsflansche 12 sind dabei Dichtungen 28 eingelegt (siehe Fig. 3 und 4).

Wie in den Fig. 2 bis 4 gezeigt, ist von der Kanalwand 10 eine Falztasche 30 nach außen gezogen, die vom Verbindungsflansch 12 weg weist. In diese Falztasche ist der im Profil hakenförmig umgebogene freie Rand 32 des Stützschenkels 14 jedes Verbindungsflansches 12 eingehängt und sodann durch Aufeinanderwalzen der verfalzten Teile festgelegt.

Die Pfeile 34 in Fig. 3 zeigen, daß im Eckbereich infolge der Verschraubung mit den Schraubbolzen 24 der Stützschenkel 14 auf Zug belastet wird. Gegen diese Zugbelastung bietet der Falz 30, 32 einen ausgezeichneten Widerstand.

Die Pfeile 36 in Fig. 4 lassen erkennen, daß in einem mittleren Bereich zwischen zwei Eckverbindungen gemäß Fig. 3 durch die eingelegten Dichtungen 28 eine, wenn auch kleinere, Druckbelastung auf den Stützschenkel 14 ausgeübt wird. Bei guter Anpressung des Falzes 30, 32 hält dieser den auftretenden Druckkräften ohne weiteres stand.

In dem am weitesten von der Kanalwand 10 entfernten Abschnitt weist bei dieser Ausführungsform jeder Stützschenkel 14 einen im Profil etwa rechteckigen, etwa parallel zur Kanalwand 10 nach außen stehenden Wulst 38 auf. Wie aus Fig. 4 ersichtlich, kann auf die Wülste 38 zweier aneinanderliegender Verbindungsflansche 12 eine die Ausrichtung der Verbindungsflansche in einem mittleren Bereich zwischen den Eckwinkelstücken 20 bewirkende Verbindungsklammer 40 mit Preßsitz aufgesetzt sein.

Wie insbesondere aus den Fig. 2 und 3 ersichtlich, weisen die Schenkel 18 längs eines Randes im Querschnitt rechteckige Ansätze 42 auf, die sich jeweils in einen Wulst 38 einfügen und somit zur einfacheren Festlegung der Eckwinkelstücke 20 vor dem Festziehen der Muttern 26 dienen.

Die in Fig. 5 gezeigte Ausführungsform unterscheidet sich von der bisher erläuterten Ausführungsform lediglich durch das Fehlen des Wulstes 38. Diese Ausführungsform reicht für viele Anwendungsfälle, insbesondere bei kleineren Kanalquerschnitten, vollständig aus. In diesem Falle tragen die Schenkel 18 der Eckwinkelstücke 20 sich über ihre ganze Fläche erstreckende Ansätze 44 mit etwa dreieckigem Querschnitt, die sich in die Verbindungsflansche 12 etwa einfügen, so daß die Eckwinkelstücke gehalten werden.

In den Fig. 6 und 7 sind zwei Ausführungsformen mit von der Kanalwand 10 ins Kanalinnere gezogenen, zum jeweiligen Verbindungsflansch 12 hin weisenden Falztaschen 30' vorgesehen, in welche der hakenförmig umgebogene Rand 32 des Stützschenkels 14 eingefalzt ist. Bei dieser Ausführungsform kann die Falzverbindung 30', 32 die gemäß Fig. 4 auftretenden Druckkräfte 36 ebenso stark aufnehmen wie die gemäß Fig. 3 auftretenden Zugkräfte 34. Durch den am hakenförmigen Rand 32 anliegenden nach außen weisenden Teil 46 der Falztasche 30' wird der Rand 32 auch beim Auftreten starker Druckkräfte 36 einwandfrei festgehalten.

Im übrigen entspricht bezüglich der Ausbildung des Wulstes 38 und des Ansatzes 42 Fig. 7 der Ausführungsform gemäß Fig. 2 und bezüglich des fehlenden Wulstes und des Ansatzes 44 Fig. 6 der Ausführungsform gemäß Fig. 5.

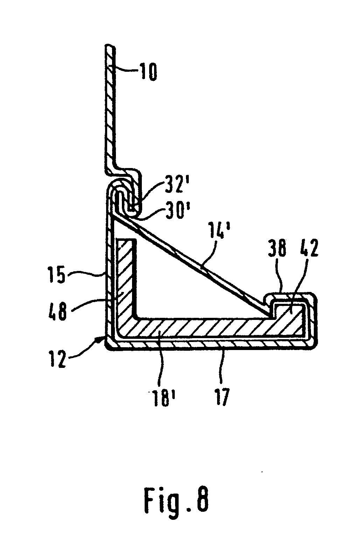

Bei der Ausführungsform gemäß Fig. 8 ist nach Ausbildung einer außerhalb der Kanalwandebene angeordneten, vom Verbindungsflansch 12 wegweisenden Falztasche 30' zunächst ein Stützschenkel, anschließend der Wulst 38 und der senkrecht von der Kanalwand 10 abstehende Flanschteil 17 angeformt und ein parallel zur Kanalwand 10 liegender Anschlußschenkel 15 bildet den Abschluß. Der hakenförmig nach außen umgebogene Rand 32' des Anschlußschenkels 15 ist in die Falztasche 30' von innen eingefalzt. Diese Ausführungsform ergibt ebenfalls eine sehr gute Verankerung des Verbindungsflansches 12, da etwa in dem Stützschenkel 14' auftretende Druckbelastungen unmittelbar von der Kanalwand 10 aufgenommen werden. Die Schenkel 18' der Eckwinkelstücke 20 weisen bei dieser Ausführungsform zusätzlich zu den Ansätzen 42 zur noch besseren Festlegung abgewinkelte, an den Stützschenkeln 14' anliegende Anlageabschnitte 48 auf.

## Patentansprüche

1. Luftkanalabschnitt aus ebenen Blechwänden (10) mit an deren Ende einstückig angeformtem Verbindungsflansch (12), der ein wenigstens teilweise hohles Profil mit einem zur Kanalwand (10) zurückgeführten Stützschenkel (14) aufweist, in das an den Ecken des Luftkanalabschnitts die Schenkel (18) von Eckwinkelstücken (20) zur Herstellung einer Schraubverbindung (24, 26) mit einem anschließenden Luftkanalabschnitt einsteckbar sind, dadurch gekennzeichnet, daß der quer zur Längsrichtung des Luftkanalabschnitts verlaufende freie Rand (32) des Verbindungsflansches (12) mittels eines durchgehenden Falzes (30, 30', 32, 32') mit der Kanalwand (10) verbunden ist, wobei von der Kanalwand (10) eine außerhalb oder innerhalb der Kanalwandebene angeordnete, vom Verbindungsflansch (12) weg- oder zu diesem hinweisende Falztasche (30, 30') gebildet ist, über die der im Profil hakenförmig umgebogene freie Rand (32, 32') des Verbindungsflansches (12) eingehängt ist.

2. Luftkanalabschnitt nach Anspruch 1, dadurch gekennzeichnet, daß der Stützschenkel (14) in seinem am weitesten von der Kanalwandebene entfernten Abschnitt einen nach außen stehenden durchgehenden Wulst (38) aufweist.

3. Luftkanalabschnitt nach Anspruch 2, dadurch gekennzeichnet, daß die Schenkel (18) der Eckwinkelstücke (20) Ansätze (42) tragen, die sich in die Wülste (38) einfügen.

4. Luftkanalabschnitt nach Anspruch 3, dadurch gekennzeichnet, daß die Schenkei (18') der Eckwinkelstücke (20) parallel zur Kanalwand (10) abgewinkelte Anlageabschnitte (48) aufweisen.

5. Luftkanalabschnitt nach einem der vorangehenden Ansprüche, dadurch gekennzeichnet, daß das hohle Profil im wesentlichen dreieckig ist und der Stützschenkel (14) schräg zur Kanalwand (10) zurückgebogen ist.

6. Luftkanalabschnitt nach einem der vorangehenden Ansprüche, dadurch gekennzeichnet, daß ein an den freien Rand (32') des Verbindungsflansches (12) angrenzender Anschlußschenkel (15) in der Ebene der Kanalwand (10) liegt.

## Claims

1. An air duct section made from flat sheet metal walls (10) having a connection flange (12) formed in one piece on their ends which has an at least partially hollow profile comprising a support leg (14) which extends back to the duct wall (10) into which profile, at the corners of the air duct section, the legs (18) of corner angle elements (20) can be inserted in order to be able to form a bolted connection (24, 26) with an adjacent air duct section, characterized in that the free edge (32) of the connection flange (12) extending at right angles to the longitudinal direction of the air duct section is connected by means of a continuous interlocking fold connection (30, 30', 32, 32') to the duct wall (10), a fold pocket (30, 30') being formed in the duct wall (10), arranged inside or outside the plane of the duct wall and pointing away from or towards the connection flange (12), in which pocket the free edge (32, 32') of the connection flange (12), which is bent into a hook shaped profile, is attached.

2. An air duct section as claimed in claim 1, characterized in that the support leg (14) comprises, in its portion furthest from the plane of the duct wall, a continuous outwardly projecting enlarged portion (38).

3. An air duct section as claimed in claim 2, characterized in that the legs (18) of the corner angle elements (20) comprise projections (42) which are inserted in the enlarged portions (38).

4. An air duct section as claimed in claim 3, characterized in that the legs (18') of the corner angle elements (20) comprise positioning sections (48) bent at an angle parallel to the duct wall (10).

5. An air duct section as claimed in any one of the preceding claims, characterized in that the hollow profile is substantially triangular and the support leg (14) is bent back at an angle to the duct wall (10).

6. An air duct section as claimed in any one of the preceding claims, characterized in that, adjacent to the free edge (32') of the connection flange (12), there is a connection leg (15) in the plane of the duct wall (10).

## Revendications

1. Segment de canal d'air formé de parois en tôle plane (10) avec à ses extrémités, une bride de liaison (12') faisant corps, cette bride ayant au moins partiellement un profil creux avec une branche d'appui (14) ramenée sur la paroi de canal (10), et qui, au coin du segment de canal d'air reçoit les branches (18) de pièces de coin (20) pour réaliser une liaison vissée (24, 26) avec un segment de canal d'air adjacent, segment caractérisé en ce que le bord libre (32) transversal par rapport à la direction longitudinale du segment de canal d'air de la bride de fixation (12) est relié à la paroi de canal (10) par une pliure continue (30, 30', 32, 32') pour former avec la paroi de canal (10), une agrafe (30, 32) prévue à l'intérieur ou à l'extérieur du plan de la paroi du canal et qui est dirigée vers la bride de fixation (12) ou dans la direction opposée, agrafe dans laquelle s'accroche le bord libre (32, 32') recourbé à profil en crochet de la bride de liaison (12).

2. Segment de canal d'air selon la revendication 1, caractérisé en ce que la branche d'appui (14) comporte dans sa partie éloignée du plan de la paroi du canal, un bourrelet (38) continu, en saillie vers l'extérieur.

3. Segment de canal d'air selon la revendication 2, caractérisé en ce que les branches (18) des pièces de coin (20) comportent des rebords (42) qui se logent dans les bourrelets (38).

4. Segment de canal d'air selon la revendication 3, caractérisé en ce que les branches (18') des pièces de coin (20) ont des segments d'appui (48) recourbés parallèlement à la paroi de canal (10).

5. Segment de canal d'air selon l'une des revendications précédentes, caractérisé en ce que le profil des creux est essentiellement triangulaire et la branche d'appui (14) est recourbée en biais par rapport à la paroi (10) du canal.

6. Segment de canal d'air selon l'une des revendications précédentes, caractérisé en ce qu'une branche de raccordement (15) adjacente au bord libre (32') de la bride de liaison (12) est située dans le plan de la paroi (10) du canal.

Fig.1

Fig.2

Fig.3

**Fig.4**

**Fig.5**

**Fig.6**

**Fig.7**

7

Fig. 8